# EUROPEAN PATENT APPLICATION

(11) **EP 2 208 897 A1**
(43) Date of publication of application: **21.07.2010**
(21) Application number: 09000770.9
(22) Date of filing: 20.01.2009
(51) Int. Cl.: F16B 37/12

(54) **Improved reusable expansion anchoring assembly and setting method thereof**

(71) Applicant: Lee, Chong Ming, Corona CA 92879 (US); Lee, Kang Hong, Kangshan, Kaohsiung (TW)
(72) Inventor: Lee, Chong Ming, Corona CA 92879 (US); Lee, Kang Hong, Kangshan, Kaohsiung (TW)
(74) Representative: Becker Kurig Straus

(57) **Abstract**

A reusable expansion anchoring assembly (1) comprises a spiral tang (2) and a bolt (3). The spiral tang is formed by spirally coiling a long wire (21), and the bolt includes a head (31) and a body (32). A spiral part is provided on the body to form a plurality of threads (331) spaced equidistantly and the threads at the bottom of the body are in tapered shape. In the setting process, the first thread is assembled with a gap (w) of the spiral tang, and the body of the bolt and the spiral tang are inserted into a round and elongated hole (91) provided in an object (9) with substantial depth (h). Turning the bolt head bolt produces sufficient force to assemble the first thread with the spiral tang. Under normal or improper operation, the spiral tang is movable relative to the bolt and can be expanded, and a firm connection between the bolt and the object can be formed.

## Description

### Technical Field

The present invention relates to a reusable expansion anchor and, more particularly, to an improved reusable expansion anchoring assembly and setting method thereof for inserting the body of a bolt and a spiral tang into a round and elongated hole of an object. With proper or improper force during insertion, the spiral tang can always be adjusted and expanded relative to the body of the bolt. Thereby, a firm connection between the bolt and the object is formed, and a reusable expansion anchoring assembly is also achieved.

### Background

Presently known expansion anchors are mainly composed of a sleeve provided with a plurality of blades and a bolt passing through the sleeve. One end of the bolt is in cone shape while another end is provided with threads. Consequently, the bolt is movable relative to the sleeve by turning the bolt when the bolt is put through the sleeve and inserted into a round and elongated hole of masonry. When pushed at the cone-shape end of the bolt, each blade of the sleeve can be expanded radially and fixed at the inner wall of the round and elongated hole to form a firm connection between the expansion anchor and the masonry for hanging heavy objects.

However, when above expansion anchors are to be discarded, it is difficult to treat the surface of the masonry since the bolt protrudes from the surface of the masonry. Besides, it is hard for the expansion anchor to be detached from the masonry once inserted into the round and elongated hole of the masonry. There are other disadvantages including waste of materials and elevating cost. In addition, the location of the hole on the masonry for inserting the bolt cannot be reused once a bolt is inserted therein.

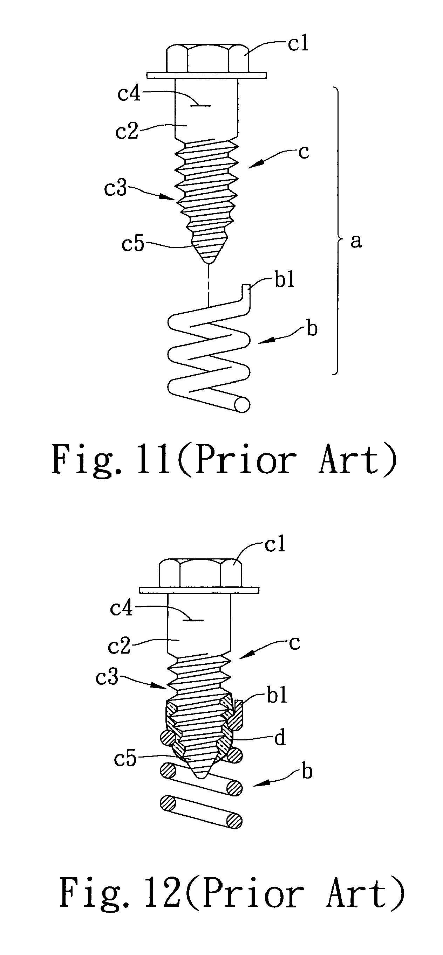

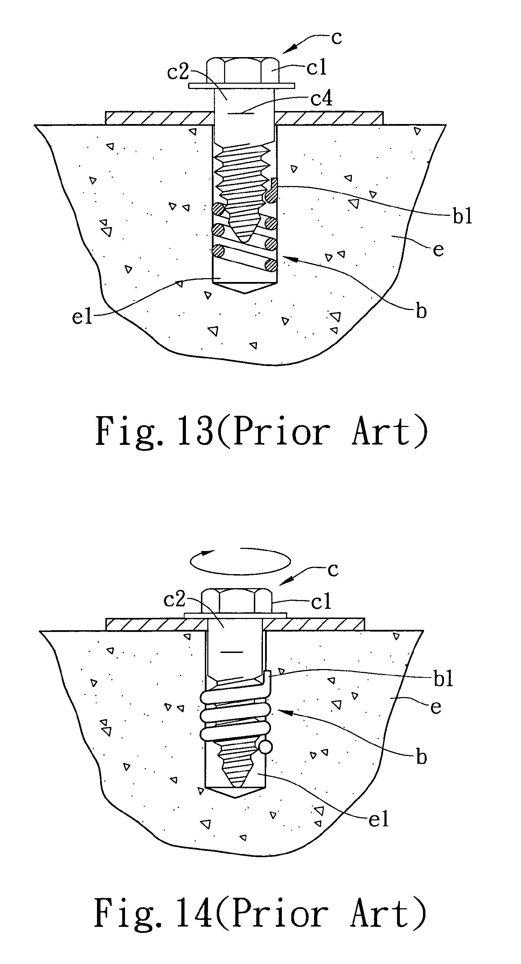

Therefore, some skilled persons in the art endeavored to design reusable expansion anchors to overcome above problems. What is shown in Figs. 11 and 12 is disclosed in US patent (US No.5,006,023) titled "STRIP-OUT PREVENTING ANCHORING ASSEMBLY AND METHOD OF ANCHORING". The structure in that patent mainly includes a reusable anchor "a", a spiral tang "b" and a bolt "c". One end of the spiral tang "b" is provided with a stop tang "b1" while one end of the bolt "c" is provided with a head "c1". A body "c2" is extended from another end of the head "c1" and the body "c2" is provided with threads "c3" partially. Besides, the body "c2" is provided with a depth set mark "c4" and an entering end "c5" of the threads "c3" disposed on the body "c2" is in cone shape. Under normal use, the entering end "c5" of the body "c2" is first fastened to the spiral tang "b" by adhesives. Then, the bolt "c" and the spiral tang "b" is inserted by force into the round and long hole "e1" of an object "e" until the depth set mark "c4" on the body "c2" is at the same level of the entrance of the round and long hole (as shown in Fig.13). Moreover, the body "c2" of the bolt "c" is moved into the spiral tang "b" by turning the head "c1" of the bolt "c" and the spiral tang "b" can be prevented from being rotated by positioning means of the stop tang "b1". The spiral tang "b" is expanded and engaged with the inner wall of the round and long hole "e1" (as shown in Fig. 14). Therefore, the bolt "c" is reusable since the bolt "c" can be detached when it is not in use any more. In addition, detaching the bolt "c" will facilitate the treatment of the surface of the object "e".

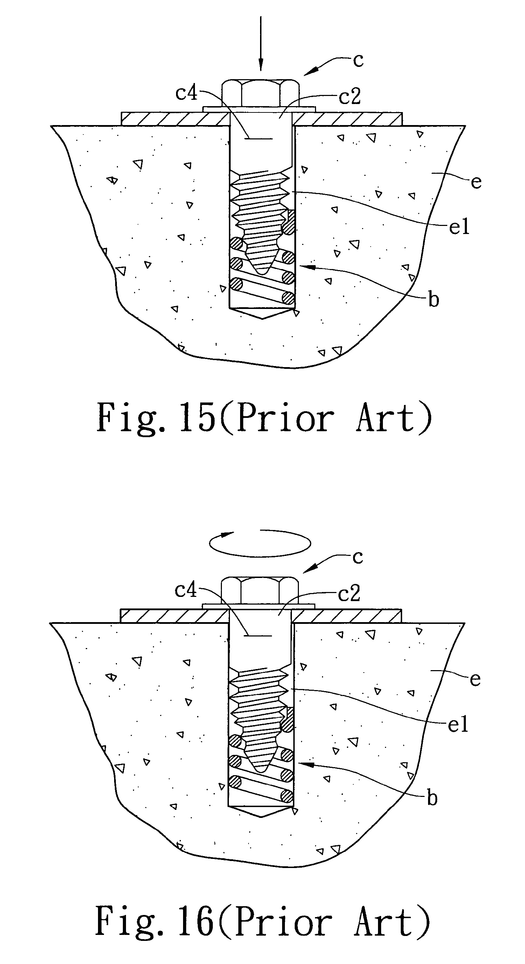

However, most technicians usually fail to obey the above procedures during operation. Some problems occur due to the improper operation. In other words, the bolt "c" and the spiral tang "b" are inserted completely into the round and long hole "e1" of the object "e" without noticing the depth set mark "c4" on the body "c2" (as shown in Figs.15 and 16). In this case, the problems will occur as follows:

1. The entering end of the body of the bolt is in cone shape and is adhered to the spiral tang. When the body of the bolt and the spiral tang are completely inserted into the round and long hole, the head of the bolt is against the surface of the object and is not spaced from the depth set mark at a distance in advance. In this case, because the diameter of the threads provided on the entering end of the body is not wide enough to be assembled with the spiral tang, the bolt will tend to free spin and the body of the bolt will stay within the upper part of the spiral tang and, therefore, cannot be moved downward by turning the head of the bolt. Therefore, it is unable to expand the spiral tang for the purpose of connecting the object.

2. During the process of connecting the object, operators have to exert tremendous force to have strong enough force to expand the spiral tang radially. Thereby, the bolt can be broken easily if the structural strength of the bolt is not strong enough.

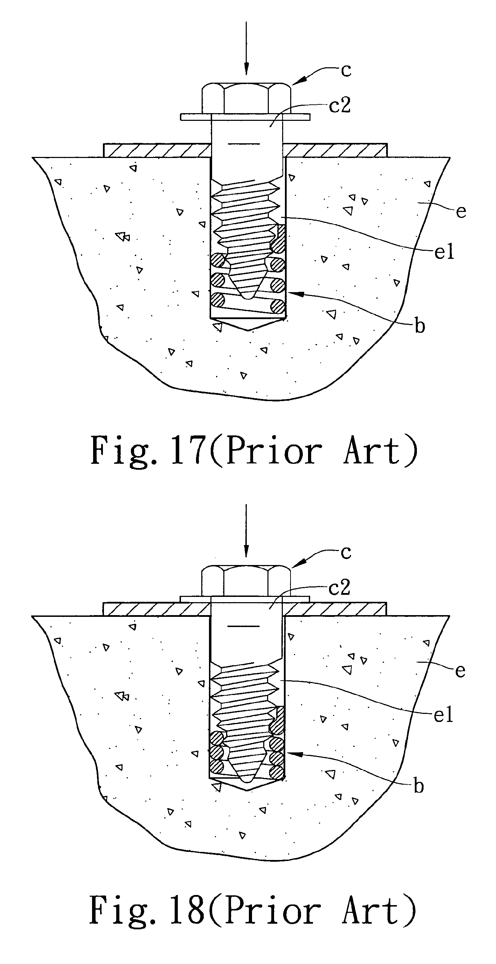

Besides, when the depth of the round and long hole in the object is not deep enough, if use improperly, the spiral tang will be compressed at the bottom of the round and long hole at the entering end of the body of the bolt (as shown in Figs. 17 and 18). In this case, the threads on the body of the bolt are still unable to be assembled with the spiral tang, and consequently the spiral tang cannot be expanded radially to connect the object.

In order to solve above problems, inventor had the motive to study and develop the present invention. After hard research and development, an improved reusable expansion anchoring assembly and setting method thereof are disclosed for operators to form an effective connection between the bolt and the spiral tang during normal use, to have the bolt and the spiral tang assembled with each other, and to have the spiral tang expanded radially for connecting an object after the bolt and the spiral tang are both inserted completely into the round and elongated hole of the object even during improper use.

### Summary of the disclosure

An object of the present invention is to provide an improved reusable expansion anchoring assembly, where a thread structure is provided at the bottom of the body of a bolt. When turning the bolt, the provided special thread structure at the bottom of the body will lift up the spiral tang and expand to form a strong connection with the object. Consequently, under improper use, when the bolt and the spiral tang are inserted completely into the round and elongated hole of the object, the spiral tang can be moved upward along with threads and expanded, and a strong connection can be formed between the bolt and the object by turning the head of the bolt.

Another object of the present invention is to provide a setting method of an improved reusable expansion anchoring assembly. By providing the structural strength change of the bolt and using steel material of higher carbon content after heat treatment, the bolt can be prevented from being broken during the assembling process and the setting quality can be ensured.

Another object of the present invention is to provide a setting method of an improved reusable expansion anchoring assembly. By providing the depth increasing of the round and elongated hole in the object, the original length and shape of the spiral tang can be kept after the bolt and the spiral tang are completely inserted into the round and elongated hole. Besides, the spiral tang will not touch or be smashed at the bottom of the round and elongated hole. Consequently, the spiral tang can be expanded radially to connect the object after being assembled with the threads of the bolt.

In order to achieve the above objects, the present invention provides an improved reusable expansion anchoring assembly, which is received and fixed within a round and elongated hole defined in an object. The reusable expansion anchoring assembly comprises a spiral tang and a bolt. The spiral tang is formed by spirally coiling a significant long wire around a spindle and has an internal and external diameter with a plurality of gaps. The gaps are spaced equidistantly with each other and parallel to the direction of the spindle. Besides, a free end is formed at the lower end of the spiral tang while a stop tang is formed at the upper end of the spiral tang. The bolt includes a head and a body. A spiral part of the body is the coiling part starting from the bottom of the body to form a plurality of threads. The threads have equal pitch with one another and are in tapered shape at the bottom of the body. The first thread from the bottom of the body enters the spiral tang at upper end so as to be assembled within a gap. The largest external diameter of the first thread is larger than the internal diameter of the spiral tang and clear crests and valleys are formed on the tapered-shape threads.

Consequently, when the bolt is assembled with the first gap of the spiral tang when inserted into the round and elongated hole, the spiral tang can be adjusted relative to the bolt and can always be expanded and fixed by turning the head of the bolt.

In practice, the largest external diameter of the first thread is larger than the internal diameter of the spiral tang within the range of one-fourth to three-fourths the length of the wire's diameter of spiral tang. In other words, when the valley of the thread 331 is in circular shape, the largest external diameter defined by the crest of the first thread is larger than the smallest internal diameter defined by the valley within the range of one-fourth to three-fourths of the length of the wire's diameter.

In practice, the bolt is made of heat treated medium carbon steel.

The setting method of an improved reusable expansion anchoring assembly comprises steps of: a. providing a spiral tang and a bolt, where the bolt includes a head and a body, the body is provided with a spiral part and has a tapered bottom, and the first thread from the bottom of the body assembles with a gap inside the upper end of the spiral tang; b. providing a round and elongated hole within an object to be worked on, where the depth of the hole is longer than the total length of the body of the bolt and the spiral tang that are to be assembled; and c. under proper force, , and keeping some space between the head of the bolt and the object; moving the bolt downward by turning the head of the bolt, and assembling the bolt with the spiral tang completely; consequently, the spiral tang expanded radially and engaged with the inner wall of the round and elongated hole to form similar functions of a nut, a firm connection formed between the bolt and the object, and the bolt can be removed from the round and elongated hole when turned in counterclockwise direction.

In practice, the setting method of the present invention further comprises a step: inserting the spiral tang and the body of the bolt through a thick fixture, where the depth of the round and elongated hole is greater than the difference that results from the total length of the body of the bolt and the spiral tang after assembly minus the thickness of the fixture.

In practice, when improper force is applied, the partially assembled bolt body and the spiral tang are completely inserted into the round and elongated hole; the head of the bolt is against the surface of an object. By turning the head of the bolt, the spiral tang can be moved upward relative to the bolt, expanded radially, and engaged with the inner wall of the round and elongated hole to perform similar actions of a nut. Thereby, a firm connection between the bolt and the object can be formed. The bolt can be removed from the round and elongated hole when turned in counterclockwise direction.

The following detailed description, given by way of examples or embodiments, will best be understood in conjunction with the accompanying drawings.

### Brief Description of the Drawings

Fig. 1 shows an exploded view of a preferred embodiment of the reusable expansion anchoring assembly of the present invention.

Fig. 2 shows a sectional view of the preferred embodiment of the assembled reusable expansion anchoring assembly of the present invention.

Fig. 3 shows a flowchart of steps for normally inserting a bolt according to the present invention.

Fig. 4 is a sectional view showing a bolt body and a spiral tang before inserted into a round and elongated hole according to the present invention.

Fig. 5 is a sectional view showing that a bolt and a spiral tang are inserted into the round and elongated hole, under normal use, and the bolt is not turned according to the present invention.

Fig. 6 is a sectional view showing that a bolt is turned, under normal use, the spiral tang is in an expanded and fixed condition.

Fig. 7 is a sectional view showing that a thick fixture is fixed between a bolt head and the surface of an object according to the present invention.

Fig. 8 shows a flowchart of steps for inserting a bolt under improper use according to the present invention.

Fig. 9 is a sectional view showing the bolt and the spiral tang where the bolt is completely inserted into the round and elongated hole during improper use according to the present invention.

Fig. 10 is a sectional view showing that a bolt is turned and the spiral tang is in an expanded and fixed condition when the bolt is completely inserted into the round and elongated hole during improper use according to the present invention.

Fig. 11 shows an exploded view of a device disclosed by a prior art.

Fig. 12 shows a sectional view of the assembled device of the prior art.

Fig. 13 is a sectional view showing the bolt and the spiral tang of the device of the prior art that are inserted into a long round hole, the bolt was not turned under normal use.

Fig. 14 is a sectional view showing that the bolt is assembled into the spiral tang and the spiral tang is expanded and fixed under normal use according to the prior art.

Figs. 15 and 16 are sectional views showing that, under improper use, the spiral tang fails to expand by turning the bolt because the bolt is turned but not moved after it is completely inserted into the round and long hole according to the prior art.

Figs. 17 and 18 are sectional views showing that the spiral tang fails to expand since the spiral tang is compressed at the entering end of the bolt body at the round and long hole according to the prior art.

### Detailed Description

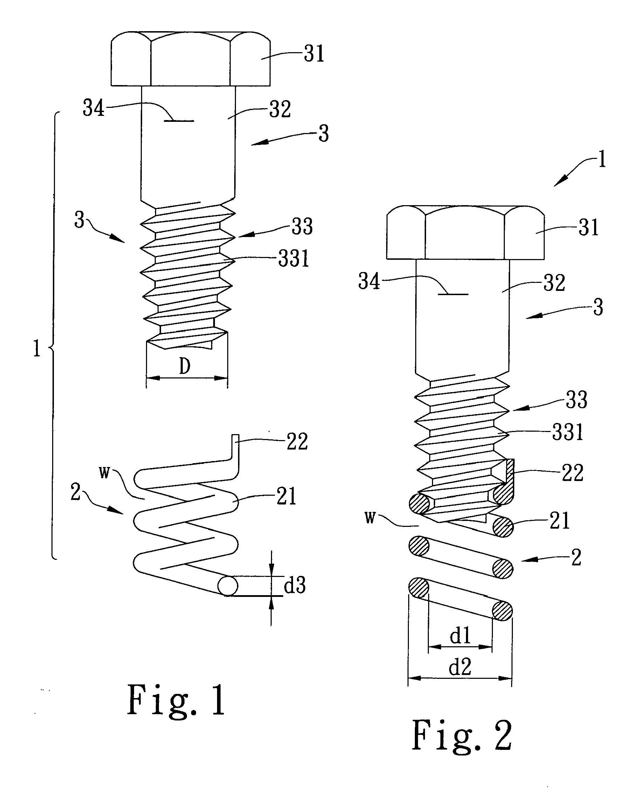

Please refer to Figs. 1 and 2 showing a preferred embodiment according to the present invention. A reusable expansion anchoring assembly 1 according to the present invention comprises a spiral tang 2 and a bolt 3.

The spiral tang 2 is formed by spirally coiling a long wire 21 around a spindle, the long wire has a diameter. The lower end of the long wire 21 is a free end and the upper end thereof is designed as a flat stop tang 22. After the long wire 21 is coiled to form a spiral tang 2; the long wire has a length, an internal diameter d1, an outer diameter d2, and a plurality of gaps "w", where the gaps are separated equidistantly with each other and parallel to the direction of the spindle of the spiral tang 2. The stop tang 22 extends from the upper end of the spiral tang 2 toward the direction parallel to the spindle.

The bolt 3 is made of heat treated medium carbon steel. Further, the bolt 3 can also be made of alloy steel or other metal materials that possess equal or greater strength and hardness than the above heated treated medium carbon steel. The bolt 3 includes a head 31 and a long cylinder-shape body 32. The head 31 is formed at the upper end of the body 32 and is in hexagonal shape. In practice, the head 31 can be designed in other polygonal shapes or ring shape. A spiral part 33 is coiled around the long cylinder-shape body 32 from the bottom thereof toward the head 31 to form a plurality of threads 331, the bottom of the body 32 and part of the body 32 have the threads 331 with equal pitch. The bottom of the body 32 is formed with tapered threads and the tapered threads are gradually becoming parallel threads. The largest external diameter "D" of the first thread 331 from the bottom of the body 32 is larger than the internal diameter d1 of the spiral tang 2. The difference there-between is preferably within the range of one-fourth to three-fourths of the length of the wire's diameter d3. In practice, the valley of the thread 331 is in circular shape. The largest external diameter "D" of the first thread 331 is the outer diameter defined by the crest of the first thread 331, and the internal diameter d1 of the spiral tang 2 is the minimum outer diameter defined by the valley of the first thread 331. Accordingly, the difference between the outer diameter defined by the crest and the minimum outer diameter defined by the valley is within the range of one-fourth to three-fourths of the length of the wire's diameter. The first thread of the tapered threads has clear crest and valley.

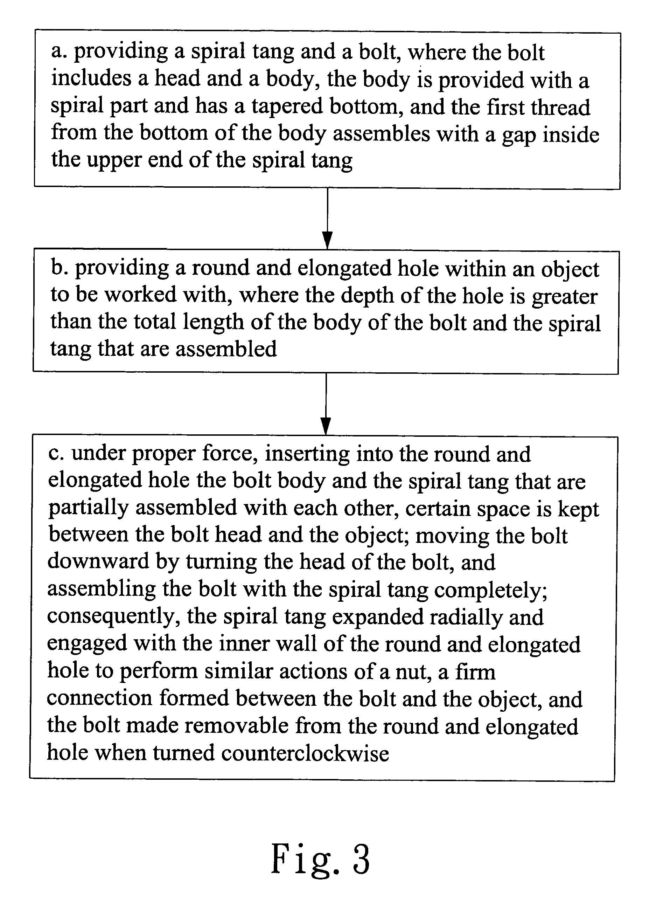

Please refer to Fig. 3, which shows a preferred embodiment of a setting method of a reusable expansion anchoring assembly of the present invention. This method comprises following steps and is used when proper force is exerted.

A. Providing a spiral tang 2 and a bolt 3, where the bolt 3 includes a head 31 and a body 32, the body 32 is provided with a spiral part 33, and the first thread 331 from the bottom of the body 32 assembles with a gap "w" inside the upper end of the spiral tang 2;

B. Providing a round and elongated hole 91 in an object 9 to be worked with, where the depth of the round and elongated hole 91 is greater than the total assembled length of the bolt body 32 and the spiral tang 2; and

C. Inserting the partially assembled bolt body 32 and the spiral tang 2 into the round and elongated hole 91, certain space is kept between the head 31 of the bolt and the object 9; moving the bolt 3 downward by turning the head 31 thereof, and assembling the bolt 3 with the spiral tang 2 completely.

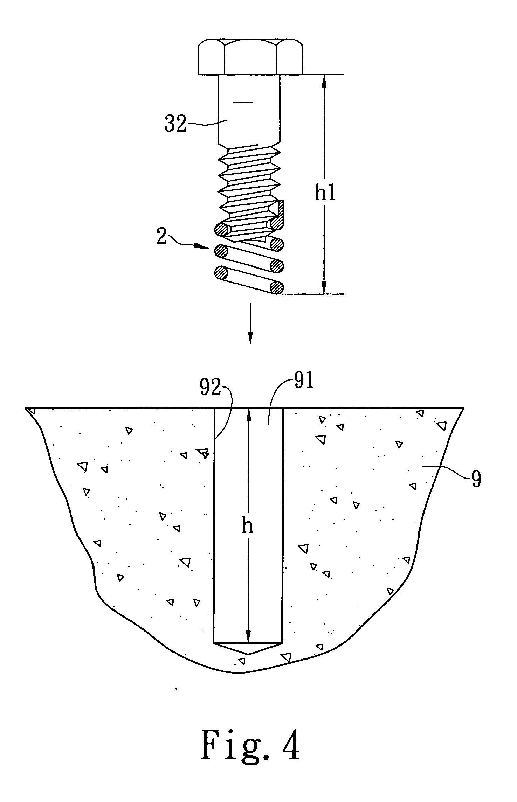

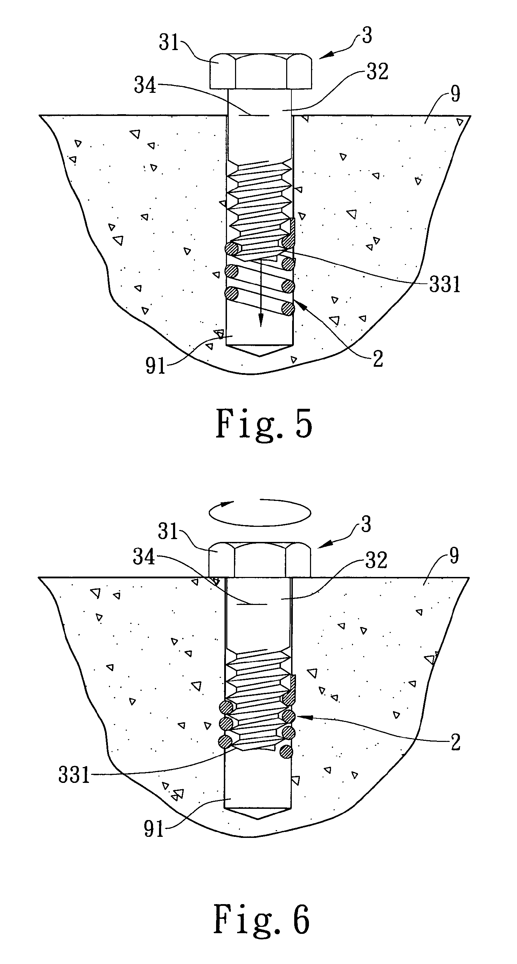

Moreover, two steps that are provided before the step "A" mentioned above including: a step of forming a depth set mark 34 on the body 32, and a step of processing the bolt 3 made of heat treated medium carbon steel material in order to enhance the strength of the bolt 3 by the heat treatment. In step "B", the depth "h" of the round and elongated hole 91 is preferably at least 0.5 centimeter longer than the total length h1 of the bolt body 32 and the spiral tang 2 at assembly (as shown in Fig. 4). In step "C", an operator exerts a force to punch the body 32 and the spiral tang 2 that are partially assembled together into the round and elongated hole 91 until the depth set mark 34 is at the entrance of the round and elongated hole (as shown in Fig. 5). After a force is exerted to rotate the head 31 of the bolt 3, the spiral tang 2 can be inserted and fixed in the round and elongated hole 91 by a resistance from the engagement of the stop tang 22 with the inner wall 92 of the round and elongated hole. Besides, when the bolt 3 is turned and moved into the round and elongated hole 91, the spiral tang 2 is expanded radially and engaged with the inner wall 92 of the round and elongated hole of the object 9 to perform similar actions of a nut. Consequently, a firm connection can be formed between the bolt 3 and the object 9 (as shown in Fig. 6). Furthermore, when turned counterclockwise, the bolt 3 is also removable from the round and elongated hole 91 of the object 9. In this case, the expanded spiral tang stays and is still engaged with the inner wall 92, the same or another bolt 3 can be inserted again to assemble with the spiral tang.

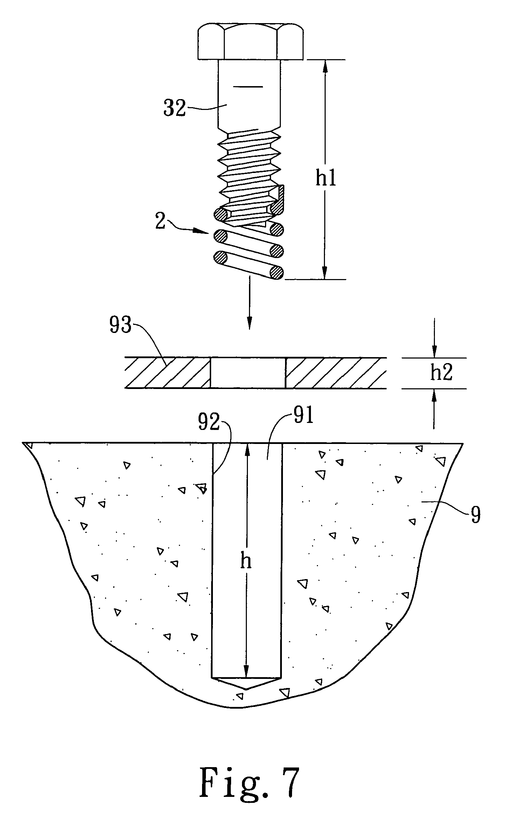

Thereby, when head 31 of the bolt 3 is designed in ring shape, it will be more laborsaving to hang the object 9 by using equipment after connecting the bolt 3 with the object 9, or by increasing the force arm for rotating the bolt 3 after inserting a long rod through the ring. Besides, when the head 31 of the bolt 3 is in hexagonal or other polygonal shape, a fixture 93 with a thickness h2 (as shown in Fig. 7) can be fixed between the head 31 of the bolt 3 and the surface of the object 9. In this case, the value of the thickness h2 of the fixture 93 should be subtracted from the value of the depth "h" of the round and elongated hole 91. In other words, the depth of the round and elongated hole 91 should be greater than the difference between the total length "h" of the body 32 of the bolt and the spiral tang 2 minus the thickness h2 of the fixture.

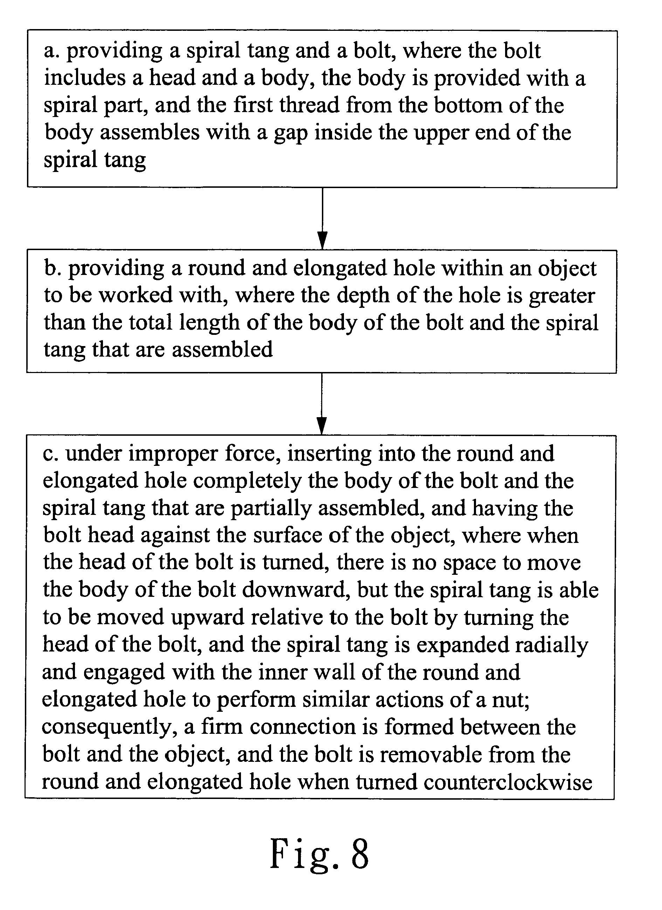

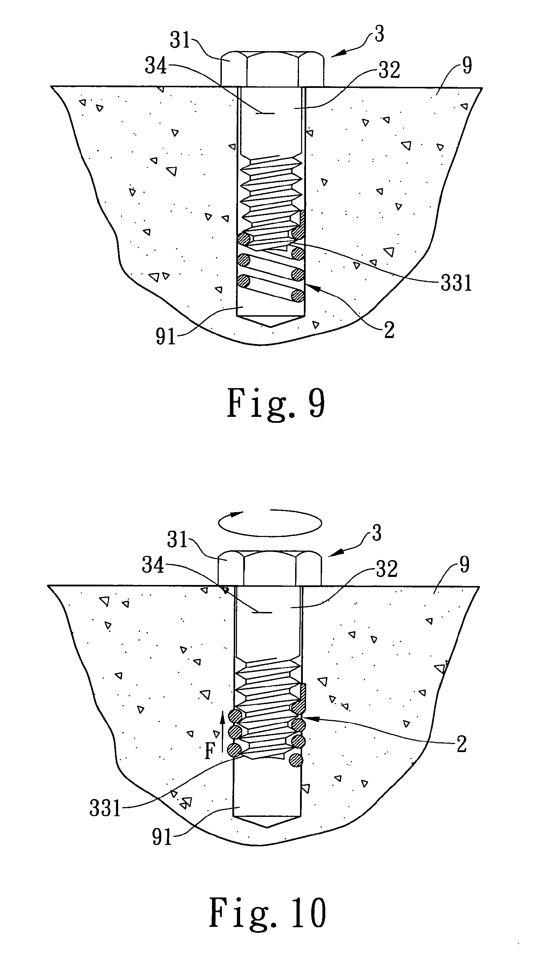

Moreover, as shown in Fig. 8, another embodiment of the setting method of a reusable expansion anchoring assembly according to the present invention is disclosed, where improper force is used. In this case, operators fail to obey normal operation procedures and exert force to punch the partially assembled body 32 and the spiral tang 2 completely into the round and elongated hole 91 without noticing the depth set mark 34, and the head 31 of the bolt 3 is against the surface of the object 9 (as shown in Fig. 9). Because the depth "h" of the round and elongated hole 91 is enough for receiving the partially assembled body 32 and the spiral tang 2, the spiral tang 2 will not be compressed completely to the bottom of the round and elongated hole 91. When an operator turns the bolt 3 to rotate the head 31 of the bolt 3 on the surface of the object 9 without moving it away, a force "F" can be formed to move the spiral tang 2 upward by the first thread 331 provided with clear crest and valley. In this case, the spiral tang can be moved upward and expanded relative to the body 32 of the bolt 3. Thereby, the spiral tang 2 is expanded radially and engaged with the inner wall 92 of the round and elongated hole 91 of the object 9, consequently, a firm connection between the bolt 3 and the object 9 can be formed. Besides, the bolt 3 is removable from the round and elongated hole 91 of the object 9 when turned counterclockwise.

Therefore, the present invention has the following advantages:

1. According to the present invention, under improper use of operators, even when the bolt and the spiral tang are completely inserted into the round and elongated hole of the object, the bolt can be assembled with the spiral tang to form a firm connection between the bolt and the object. Thereby, the waste of material resulted from the operation process errors can be avoided, the time for boring extra holes can be spared, and the operation is rendered more efficient.

2. According to the present invention, the strength of the bolt can be strengthened to prevent the bolt from breaking as a result of the strength deficiency, and, consequently, the setting quality can be ensured.

3. According to the present invention, the depth of the round and elongated hole is prolonged in order to prevent the threads from not being able to assemble the bolt and the spiral tang after the spiral tang is compressed and destroyed at the bottom of the round and long hole. Thereby, no matter with proper or improper use, the bolt can always be effectively assembled with the spiral tang.

As disclosed in the above description and attached drawings, the present invention can provide a reusable expansion anchoring assembly and setting method thereof, where the bolt can be effectively connected with the spiral tang, and the connection can be maintained when the bolt and the spiral tang are inserted completely into the round and elongated hole of the object. It is new and can be put into industrial use.

Although the embodiments of the present invention have been described in detail, many modifications and variations may be made by those skilled in the art from the teachings disclosed hereinabove. Therefore, it should be understood that any modification and variation equivalent to the spirit of the present invention be regarded to fall into the scope defined by the appended claims.

## Claims

1. A reusable expansion anchoring assembly, received and fixed within a round and elongated hole defined in an object, comprising:
a spiral tang, formed by spirally coiling a long wire with a diameter around a spindle and having an internal diameter, an outer diameter, and a plurality of gaps that are spaced equidistantly with each other and parallel to the direction of the spindle, where a free end is formed at the lower end of the spiral tang while a stop tang is formed at the upper end thereof; and
a bolt, including a head and a body, where a spiral part is coiled upward around the body from the bottom thereof to form a plurality of threads having equal pitch, the threads at the bottom of the body are in tapered shape;
wherein, the first thread from the bottom of the body enters the spiral tang at the upper end thereof and assembles with a gap; the largest external diameter of the first thread is larger than the internal diameter of the spiral tang; consequently, after the bolt is assembled with the first gap of the spiral tang when inserted into the round and elongated hole, the spiral tang can be adjusted, expanded, and fixed relative to the bolt by turning the head of the bolt.

2. The reusable expansion anchoring assembly as claimed in claim 1, wherein, under normal use, after the bolt and spiral tang are inserted into the round and elongated hole, certain space is kept between the head of the bolt body and the object, and consequently the body of the bolt is moved downward relative to the spiral tang when the head of the bolt is turned to expand and fix the spiral tang.

3. The reusable expansion anchoring assembly as claimed in claim 1, wherein, under improper use, after the bolt and spiral tang are inserted into the round and elongated hole, the head of the bolt touches the surface of the object; when the head of the bolt is turned, the body of the bolt has no space to be turned downward, but the spiral tang is moved upward relative to the body of the bolt when the head of the bolt is turned, and the spiral tang is expanded and fixed.

4. The reusable expansion anchoring assembly as claimed in claim 1, wherein the largest external diameter of the first thread at the end of the bolt is larger than the internal diameter of the spiral tang within the range of one-fourth to three-fourths of the length of the wire's diameter.

5. The reusable expansion anchoring assembly as claimed in claim 4, wherein, under normal use, after the bolt and spiral tang are inserted into the round and elongated hole, certain space is kept between the head of the bolt body and the object, the bolt body is moved downward relative to the spiral tang when the head of the bolt is turned to expand and fix the spiral tang.

6. The reusable expansion anchoring assembly as claimed in claim 4, wherein, under improper use, after the bolt and spiral tang are inserted into the round and elongated hole, the bolt head touches the surface of the object; when the head of the bolt is turned, the body of the bolt has no space to be turned downward, but the spiral tang is moved upward relative to the body of the bolt when the head of the bolt is turned, and the spiral tang is expanded and fixed.

7. The reusable expansion anchoring assembly as claimed in claim 1, wherein the bolt is made of heat treated medium carbon steel.

8. The reusable expansion anchoring assembly as claimed in claim 7, wherein, under normal use, after the bolt and spiral tang are inserted into the round and elongated hole, certain space is kept between the head of the bolt body and the object, and the body of the bolt is moved downward relative to the spiral tang when the head of the bolt is turned to expand and become fixed with the spiral tang.

9. The reusable expansion anchoring assembly as claimed in claim 7, wherein, under improper use, after the bolt and spiral tang are inserted into the round and elongated hole, the bolt head touches the surface of the object; when the bolt head is turned, the body of the bolt has no space to be turned downward, but the spiral tang is moved upward relative to the body of the bolt when the head of the bolt is turned, and the spiral tang is expanded and fixed.

10. A setting method of a reusable expansion anchoring assembly, comprising steps of:
a. providing a spiral tang and a bolt, where the bolt includes a head and a body, the body is provided with a spiral part and has a tapered bottom, and the first thread from the bottom of the body assembles with a gap inside the upper end of the spiral tang;
b. providing a round and elongated hole within an object to be worked with, where the depth of the hole is greater than the total length of the body of the bolt and the spiral tang that are assembled; and
c. under proper force, inserting into the round and elongated hole the bolt body and the spiral tang that are partially assembled with each other, certain space is kept between the bolt head and the object; moving the bolt downward by turning the head of the bolt, and assembling the bolt with the spiral tang completely; consequently, the spiral tang expanded radially and engaged with the inner wall of the round and elongated hole to perform similar actions of a nut, a firm connection formed between the bolt and the object, and the bolt made removable from the round and elongated hole when turned counterclockwise.

11. The setting method as claimed in claim 10, further comprising a step: inserting the spiral tang and the body of the bolt through a thick fixture, where the depth of the round and elongated hole is greater than the difference between the total length of the assembled bolt body and the spiral tang minus the thickness of the fixture.

12. The setting method as claimed in claim 10, further comprising a step: processing the bolt made of heat treated medium carbon steel.

13. The setting method as claimed in claim 10, wherein the difference between the depth of the round and elongated hole and the total length of the body of the bolt and the spiral tang that are assembled is at least 0.5 centimeter.

14. A setting method of a reusable expansion anchoring assembly, comprising steps of:
a. providing a spiral tang and a bolt, where the bolt includes a head and a body, the body is provided with a spiral part, and the first thread from the bottom of the body assembles with a gap inside the upper end of the spiral tang;
b. providing a round and elongated hole within an object to be worked with, where the depth of the hole is greater than the total length of the body of the bolt and the spiral tang that are assembled; and
c. under improper force, inserting into the round and elongated hole completely the body of the bolt and the spiral tang that are partially assembled, and having the bolt head against the surface of the object, where when the head of the bolt is turned, there is no space to move the body of the bolt downward, but the spiral tang is able to be moved upward relative to the bolt by turning the head of the bolt, and the spiral tang is expanded radially and engaged with the inner wall of the round and elongated hole to perform similar actions of a nut; consequently, a firm connection is formed between the bolt and the object, and the bolt is removable from the round and elongated hole when turned counterclockwise.

15. The setting method as claimed in claim 14, further comprising a step: processing the bolt made of heat treated medium carbon steel.

16. The setting method as claimed in claim 14, further comprising a step: inserting the spiral tang and the body of the bolt through a thick fixture, where the depth of the round and elongated hole is greater than the difference between the total length of the bolt body and the spiral tang minus the thickness of the fixture.
